# EUROPÄISCHE PATENTANMELDUNG

(11) **EP 2 862 742 A1**
(43) Veröffentlichungstag der Anmeldung: **22.04.2015**
(21) Anmeldenummer: 13188829.9
(22) Anmeldetag: 16.10.2013
(51) Int. Cl.: B60L 9/20, H02M 1/10

(54) **Mehrsystem-Stromrichteranordnung**

(71) Anmelder: Siemens Aktiengesellschaft, 80333 München (DE)
(72) Erfinder: Franke, Ekkehard, 90419 Nürnberg (DE)

(57) **Zusammenfassung**

Es wird eine Mehrsystem-Stromrichteranordnung (1) zur wahlweisen Versorgung eines elektrischen Antriebsmotors (17,18) eines Schienenfahrzeugs aus einem Wechselstromnetz (2) oder einem Gleichstromnetz (3) angegeben. Die Mehrsystem-Stromrichteranordnung (1) umfasst einen Gleichspannungszwischenkreis (4), der einen netzseitigen Stromrichter (13,15) mit einem lastseitigen Stromrichter (14,16) verbindet, sowie einen Vorladeschaltkreis (53) zur Vorladung des Gleichspannungszwischenkreises (4), der mindestens einen Vorladewiderstand (45,47) umfasst. Der Vorladewiderstand (45,47) ist hierbei zur Vorladung des Gleichspannungszwischenkreises (4) mittels einer Schaltgruppe wahlweise mit dem Wechselstromnetz (2) oder mit dem Gleichstromnetz (3) koppelbar.

## Beschreibung

Die Erfindung bezieht sich auf eine Mehrsystem-Stromrichteranordnung zur wahlweisen Versorgung eines elektrischen Antriebsmotors eines Schienenfahrzeugs aus einem Wechselstromnetz oder einem Gleichstromnetz.

Im Zuge der technischen Entwicklung des elektrischen Schienenverkehrs haben sich verschiedene Bahnstrom-Standards entwickelt, die noch heute parallel zueinander in verschiedenen Ländern oder Streckenabschnitten oder für verschiedenartige Schienenfahrzeuge (z.B. Fernbahn, Straßenbahn, U-Bahn, etc.) Verwendung finden. Zu den gängigen Bahnstrom-Systemen zählen insbesondere Gleichstrom-Systeme mit Spannungsbeträgen von 3 kV (DC 3kV) und 1,5 kV (DC 1,5kV) und (Einphasen-)Wechselstromsysteme mit einer Effektivspannung von 25 kV und einer Frequenz von 50 Hz (AC 25kV 50Hz) bzw. einer Effektivspannung von 15 kV und einer Frequenz von 16,7 Hz (AC 15kV 16,7Hz).

Für den grenzüberschreitenden Bahnverkehr sowie für den flexiblen Einsatz auf sonstigen verschieden-elektrifizierten Streckenabschnitten (z.B. Straßenbahnnetz und Fernbahnnetz) wurden sogenannte Mehrsystem-Fahrzeuge entwickelt, die jeweils in zwei oder mehr Bahnstrom-Systemen betrieben werden können. Hierunter fallen insbesondere solche Fahrzeuge, die sowohl mittels Gleichstrom als auch mittels Wechselstrom betreibbar sind.

Moderne Mehrsystem-Fahrzeuge weisen als Antriebsmotoren in der Regel Drehstrommotoren auf, denen aus einer vorgeschalteten Stromrichteranordnung ein mehrphasiger Wechselstrom als Antriebsstrom zur Verfügung gestellt wird.

Eine solche Stromrichteranordnung umfasst in der Regel für jeden zu versorgendem Antriebsmotor einen lastseitigen Pulsstromrichter, der zwischen den zu versorgenden Motor und einen (Gleichspannungs-)Zwischenkreis geschaltet ist. Die Stromrichteranordnung umfasst des Weiteren mindestens einen netzseitigen Stromrichter (meist ebenfalls als Pulsstromrichter ausgebildet), über den der Zwischenkreis mit dem jeweiligen Bahnstromnetz gekoppelt ist.

Bei der für ein Mehrsystem-Fahrzeug vorgesehenen Mehrsystem-Stromrichteranordnung kann der oder jeder netzseitige Stromrichter wahlweise (d.h. alternativ je nach Verfügbarkeit) mit einem von mehreren verschiedenen Bahnstromnetzen gekoppelt werden, insbesondere mit einem Gleichspannungsnetz und einem Wechselspannungsnetz.

Der Zwischenkreis einer Stromrichteranordnung muss regelmäßig vor der eigentlichen Betriebsaufnahme vorgeladen, d.h. kontrolliert auf oder zumindest in die Nähe seiner vorgesehenen Zwischenkreisspannung gebracht werden, um übergroße Einschaltströme zu vermeiden. Zur Vorladung umfasst die Stromrichteranordnung üblicherweise spezielle Vorladeschaltkreise, in denen zur Strombegrenzung bei der Vorladung ein ohmscher Vorladewiderstand vorgesehen ist.

Bei Mehrsystem-Stromrichteranordnungen sind zur Vorladung des Zwischenkreises aus einem Gleichstromnetz bzw. aus einem Wechselstromnetz regelmäßig getrennte Vorladeschaltkreise mit jeweils eigenen Vorladewiderständen vorgesehen. Diese Vorladeschaltkreise verursachen nachteiligerweise einen nicht unerheblichen Montage- und Platzaufwand. Ferner tragen die Vorladeschaltkreise in nennenswertem Umfang zu dem erforderlichen Wartungs- und Reparaturaufwand bei. Dies ist insbesondere durch den Umstand bedingt, dass die Vorladewiderstände aufgrund ihrer Größe und Anordnung regelmäßig nicht im eingebauten Zustand der Stromrichteranordnung ausgetauscht werden können, so dass für einen Austausch eines jeden Vorladewiderstands meist die gesamte Stromrichteranordnung aus dem zugehörigen Schienenfahrzeug ausgebaut werden muss.

Der Erfindung liegt die Aufgabe zugrunde, eine diesbezüglich verbesserte Mehrsystem-Stromrichteranordnung anzugeben.

Diese Aufgabe wird erfindungsgemäß gelöst durch die Merkmale des Anspruchs 1. Vorteilhafte Ausgestaltungsformen der Erfindung sind in den Unteransprüchen und der nachfolgenden Beschreibung dargelegt.

Die zur wahlweisen Versorgung eines elektrischen Antriebsmotors eines Schienenfahrzeugs aus einem Wechselstromnetz oder einem Gleichstromnetz vorgesehene Mehrsystem-Stromrichteranordnung umfasst in an sich herkömmlicher Weise einen netzseitigen Stromrichter, einen lastseitigen Stromrichter sowie einen (Gleichspannungs-)Zwischenkreis, der diese beiden Stromrichter verbindet. Beide Stromrichter sind vorzugsweise als Pulsstromrichter ausgebildet. Des Weiteren umfasst der Stromrichter einen Vorladeschaltkreis mit einem Vorladewiderstand.

Erfindungsgemäß werden dieser Vorladeschaltkreis, und insbesondere der darin angeordnete Vorladewiderstand sowohl zur Vorladung des Zwischenkreises aus dem Wechselstromnetz als auch zur Vorladung des Zwischenkreises aus dem Gleichstromnetz verwendet. Der Vorladewiderstand ist hierzu mittels einer Schaltgruppe - je nach Verfügbarkeit des entsprechenden Netzes - wahlweise mit dem Wechselstromnetz oder mit dem Gleichstromnetz koppelbar. Als Kopplung wird hierbei allgemein eine Verbindung bezeichnet, die die Übertragung von elektrischer Leistung zwischen dem Netz und der Stromrichteranordnung ermöglicht. Die Kopplung mit dem Gleichstromnetz erfolgt hierbei zweckmäßigerweise direkt durch Herstellung einer galvanischen Verbindung. Die Kopplung mit dem Wechselstromnetz erfolgt hingegen vorzugsweise indirekt über einen zwischengeschalteten Transformator. Als Schaltgruppe wird allgemein eine Anordnung eines oder mehrerer elektrischer Schaltelemente (elektromagnetischer Schalter und/oder Halbleiterschalter) bezeichnet, die die vorstehend beschriebene Mehrfunktionalität des Vorladeschaltkreises ermöglicht.

Durch die flexible Einsatzfähigkeit des einen Vorladeschaltkreises im Gleichstrombetrieb und im Wechselstrombetrieb kann gegenüber herkömmlichen Topologien von Mehrsystem-Stromrichteranordnungen zumindest ein Vorladewiderstand eingespart werden, wodurch der Herstellungsaufwand und der Platzbedarf für die Stromrichteranordnung verbessert werden. Ferner wird durch die Einsparung des Vorladewiderstandes die Störanfälligkeit der Stromrichteranordnung verbessert, wodurch auch der Wartungs- und Reparaturaufwand verringert werden.

In einer vorteilhaften Ausgestaltungsform umfasst der Gleichspannungs-Zwischenkreis zwei - elektrisch permanent verbundene oder zumindest zusammenschaltbare - Teil-Zwischenkreise, die jeweils einen netzseitigen Stromrichter mit jeweils einem lastseitigen Stromrichter verbinden. Jeder lastseitige Stromrichter dient hierbei insbesondere zur Versorgung eines eigenen Antriebsmotors.

Der Vorladeschaltkreis umfasst in diesem Fall zwei Vorladewiderstände, die mittels der Schaltgruppe wahlweise in Reihe geschaltet oder elektrisch voneinander getrennt werden können. Zur Vorladung aus dem Wechselstromnetz ist jeder der Teil-Zwischenkreise mittels der Schaltgruppe über jeweils einen zugeordneten Vorladewiderstand mit dem Wechselstromnetz koppelbar. Zur Vorladung aus dem Gleichstromnetz sind die Teil-Zwischenkreise dagegen mittels der Schaltgruppe über die Reihenschaltung der Vorladewiderstände mit dem Gleichstromnetz koppelbar. Durch diese Ausgestaltung des Vorladeschaltkreises wird - analog zu herkömmlichen Mehrsystem-Stromrichteranordnungen - erreicht, dass für die Vorladung aus dem Gleichstromnetz ein höherer Widerstandsbetrag zur Verfügung steht als für die Vorladung aus dem Wechselstromnetz, ohne hierfür aber separate Vorladewiderstände vorsehen zu müssen.

Nachfolgend wird ein Ausführungsbeispiel der Erfindung anhand einer Zeichnung näher erläutert. Darin zeigen:
- FIG 1: in einem elektrischen Schaltbild zunächst eine her-kömmliche Mehrsystem-Stromrichteranordnung, und
- FIG 2: in Darstellung gemäß FIG 1 eine Ausführungsform des erfindungsgemäßen Mehrsystem-Stromrichters.

Einander entsprechende Teile sind in beiden Figuren stets mit gleichen Bezugszeichen versehen.

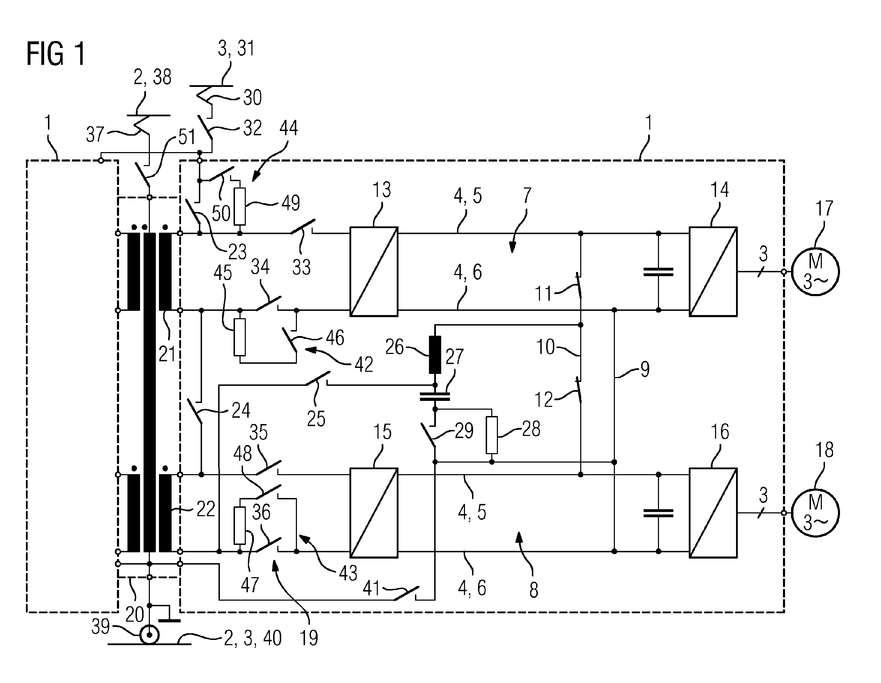

FIG 1 zeigt beispielhaft eine herkömmliche (Mehrsystem-) Stromrichteranordnung 1 für eine Mehrsystem-Lokomotive, die sowohl in einem Wechselstromnetz 2 oder einem Gleichstromnetz 3 betreibbar ist. In der Lokomotive sind hierbei zwei identisch aufgebaute Stromrichteranordnungen 1 vorgesehen, von denen aus Gründen der besseren Übersichtlichkeit lediglich eine im Detail dargestellt ist, während die andere lediglich angedeutet ist.

Die Stromrichteranordnung 1 umfasst einen (Gleichspannungs-) Zwischenkreis 4 mit einer Plusschiene 5 und einer Minusschiene 6. In der dargestellten Ausführung ist der Zwischenkreis 4 in zwei Teil-Zwischenkreise 7 und 8 gegliedert. Die Minusschienen 6 der Teil-Zwischenkreise 7 und 8 sind hierbei über eine Verbindungsschiene 9 permanent kurzgeschlossen. Die Plusschienen 5 der Teil-Zwischenkreise 7 und 8 können über eine Verbindungsschiene 10 mit zwei darin angeordneten Schaltern 11 und 12 reversibel kurzgeschlossen oder voneinander elektrisch getrennt werden.

Der Teil-Zwischenkreis 7 verbindet einen netzseitigen Pulsstromrichter 13 mit einem lastseitigen Pulsstromrichter 14. Ebenso verbindet der Teil-Zwischenkreis 8 einen netzseitigen Pulsstromrichter 15 mit einem lastseitigen Pulsstromrichter 16. Bei den lastseitigen Pulsstromrichtern 14 und 16 handelt es sich jeweils um einen dreiphasigen Vollbrücken-Wechselrichter zur Erzeugung eines dreiphasigen Antriebsstroms für jeweils einen als Last angeschlossenen Antriebsmotor 17 bzw. 18. Die netzseitigen Pulsstromrichter 13 und 15 sind jeweils als redundant ausgeführter (somit insgesamt vier Halbbrücken umfassender) Vierquadrantensteller ausgebildet.

Über den netzseitigen Pulsstromrichter 13 bzw. 15 ist der jeweilige Teil-Zwischenkreis 7 und 8 mit einem Netzanschlusskreis 19 verschaltet, über welchen der jeweilige Pulsstromrichter 13 bzw. 15 wiederum - über einen Transformator 20 - mit dem Wechselstromnetz 2 koppelbar ist.

Für den Gleichstrombetrieb werden zwei Sekundärwicklungen 21,22 des Transformators 20 über Schalter 23, 24 und 25 des Netzanschlusskreises 19 sowie über eine Drossel 26 und die Schalter 11 und 12 in Serie zwischen das Gleichstromnetz 3 und den Zwischenkreis 4 geschaltet. Die Sekundärwicklungen 21 und 22 bilden hierbei mit der Drossel 26, einem Kondensator 27 und einem Dämpfungswiderstand 28 ein Eingangsfilter. Ein den Dämpfungswiderstand 28 überbrückender Schalter 29 ist im Gleichstrombetrieb geöffnet.

Die Gleichstromeinspeisung erfolgt über einen Stromabnehmer 30, der hierfür mit einer Oberleitung 31 des Gleichstromnetzes 3 gekoppelt wird, sowie einen (Gleichstrom-)Hauptschalter 32. Die beiden netzseitigen Pulsstromrichter 13 und 15 sind im Gleichstrombetrieb durch geöffnete Schalter 33, 34, 35 und 36 des Netzanschlusskreises 19 von dem Gleichstromnetz 3 abgetrennt und werden somit nicht benutzt.

Für den Wechselstrombetrieb werden die netzseitigen Pulsstromrichter 13 und 15 indirekt über den Transformator 20 und einen Stromabnehmer 37 mit einer als Phase des Wechselstromnetzes 2 wirkenden Oberleitung 38 gekoppelt.

Die Stromrückführung erfolgt sowohl im Gleichstrombetrieb als auch im Wechselstrombetrieb über die Räder 39 der Lokomotive und das als Minuspol des Gleichstromnetzes 3 bzw. Nullleiter des Wechselstromnetzes 2 wirkende Gleis 40. Im Gleichstrombetrieb sind die Räder 39 hierzu über einen Schalter 41 mit der Minusschiene 6 des Zwischenkreises 4 verbunden.

Zur Vorladung des Zwischenkreises 4 umfasst die herkömmliche Stromrichteranordnung 1 gemäß FIG 1 drei voneinander getrennte Vorladeschaltkreise 42, 43 und 44. Von diesen Vorladeschaltkreisen 42, 43, 44 dienen die Vorladeschaltkreise 42 und 43 zur Vorladung des Zwischenkreises 4 aus dem Wechselstromnetz 2. Der Vorladeschaltkreis 42 ist hierzu dem Teil-Zwischenkreis 7 zugeordnet und entsprechend zwischen den netzseitigen Pulsstromrichter 13 und die erste Sekundärwicklung 21 des Transformators 20 geschaltet. Der Vorladeschaltkreis 43 ist dem Teil-Zwischenkreis 8 zugeordnet und entsprechend zwischen den netzseitigen Pulsstromrichter 15 und die zweite Sekundärwicklung 22 des Transformators 20 geschaltet. Der Vorladeschaltkreis 44 dient zur Vorladung des Zwischenkreises 4 aus dem Gleichstromnetz 3.

Der Vorladeschaltkreis 42 umfasst einen Vorladewiderstand 45 sowie eine Schaltgruppe, die durch den Schalter 34 sowie einen weiteren Schalter 46 gebildet ist. Im Rahmen des Vorladeschaltkreises 42 ist die Reihenschaltung des Vorladewiderstandes 45 und des Schalters 46 parallel zu dem Schalter 34 geschaltet.

Analog hierzu umfasst der Vorladeschaltkreis 43 einen Vorladewiderstand 47 und eine Schaltgruppe, die aus dem Schalter 36 sowie einem weiteren Schalter 48 gebildet ist, wobei die Reihenschaltung des Vorladewiderstands 47 und des Schalters 48 parallel zu dem Schalter 36 geschaltet ist.

Der Vorladeschaltkreis 44 umfasst schließlich einen Vorladewiderstand 49 sowie eine Schaltgruppe, die aus dem Schalter 23 sowie einem weiteren Schalter 50 gebildet ist, wobei die Reihenschaltung des Vorladewiderstands 49 und des Schalters 50 parallel zu dem Schalter 23 geschaltet ist.

Um den Zwischenkreis 4 aus dem Wechselstromnetz 2 vorzuladen, wird entweder der Vorschaltkreis 42 oder der Vorschaltkreis 43 genutzt. Insbesondere bei einem Ausfall des Teilzwischenkreises 8 erfolgt die Vorladung über den Vorschaltkreis 42, in welchem hierzu der Schalter 34 geöffnet (sperrend geschaltet), und der Schalter 46 geschlossen (leitend geschaltet) werden. Weiterhin wird der Schalter 33 geschlossen, so dass zwischen der Sekundärwicklung 21 und dem Pulsstromrichter 13 ein geschlossener Stromkreis über den Vorladewiderstand 45 gebildet ist. Insbesondere bei einem Ausfall des Teilzwischenkreises 7 erfolgt die Vorladung dagegen über den Vorschaltkreis 43, in welchem hierzu der Schalter 36 geöffnet, und der Schalter 48 geschlossen werden. Weiterhin wird der Schalter 35 geschlossen, so dass zwischen der Sekundärwicklung 22 und dem Pulsstromrichter 15 ein geschlossener Stromkreis über den Vorladewiderstand 47 gebildet ist.

Die Vorladung aus dem Wechselstromnetz 2 setzt voraus, dass die dem Wechselstromnetz 2 zugehörige Oberleitung 38 durch den Stromabnehmer 37 kontaktiert ist und dass ein zugehöriger (Wechselstrom-)Hauptschalter 51 geschlossen ist.

Sobald die Vorladung beendet ist, werden der Schalter 46 bzw. der Schalter 48 geöffnet, und die Schalter 34 und 36 geschlossen, so dass die Vorladewiderstände 45 und 47 niederohmig überbrückt sind.

Zur Vorladung des Zwischenkreises 4 aus dem Gleichstromnetz 3 werden der Schalter 50 des Vorladeschaltkreises 44 geschlossen und der Schalter 23 geöffnet. Des Weiteren werden die Schalter 24 und 25 geschlossen. Die Vorladung des Zwischenkreises 4 setzt voraus, dass der Stromabnehmer 30 mit der dem Gleichstromnetz 3 zugeordneten Oberleitung 31 kontaktiert ist, und dass der zugehörige Hauptschalter 32 geschlossen ist. Zudem wird der Zwischenkreis 4 über den Schalter 41 mit dem auf Massenpotential liegenden Gleis 40 verbunden. Somit ist zwischen dem Gleichstromnetz 3 und dem Zwischenkreis 4 ein über den Vorladewiderstand 49 führender, geschlossener Stromkreis gebildet, so dass der Zwischenkreis 4 über den Vorladewiderstand 49, die Sekundärwicklungen 21,22 und die Drossel 26 aufgeladen wird. Der Vorladewiderstand 49 bewirkt hierbei eine Begrenzung des Einschaltstroms.

Sobald die Vorladung beendet ist, werden der Schalter 50 geöffnet und der Schalter 23 geschlossen, so dass der Vorladewiderstand 49 niederohmig überbrückt ist.

In einer typischen Auslegung haben die Vorladewiderstände 45 und 47 jeweils den halben Widerstandsbetrag des Vorladewiderstands 49.

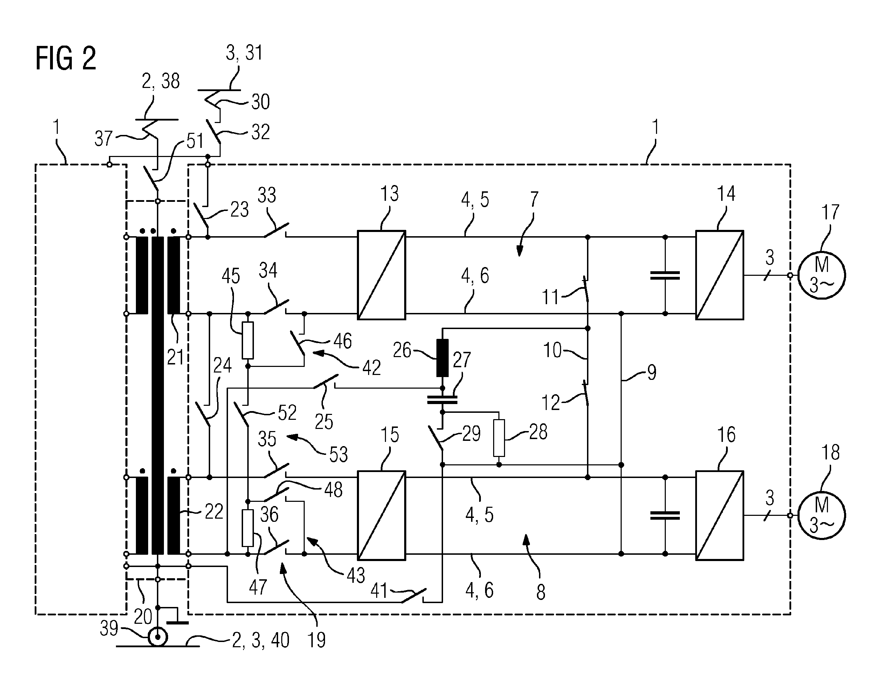

Die in FIG 2 dargestellte Ausführungsform der erfindungsgemäßen Stromrichteranordnung 1 gleicht - soweit nicht nachfolgend anders beschrieben - der herkömmlichen Bauform gemäß FIG 1. Allerdings fehlt bei der erfindungsgemäßen Stromrichteranordnung 1 gemäß FIG 2 die Vorladewiderstand 49 und der diesem zugeordnete Schalter 50. Stattdessen sind die Vorladewiderstände 45 und 47 bei der Stromrichteranordnung 1 gemäß FIG 2 durch einen Schalter 52 in Serie schaltbar. Die Vorladeschaltkreise 42 und 43 werden hierbei durch den Schalter 52 zu einem Vorladeschaltkreis 53 zusammengeschaltet, der sowohl zur Vorladung des Zwischenkreises 4 aus dem Wechselstromnetz 2 als auch zur Vorladung des Zwischenkreises 4 aus dem Gleichstromnetz 3 dient. Dieser Vorladeschaltkreis 53 umfasst somit die Vorladewiderstände 45 und 47 sowie als Schaltgruppe die fünf Schalter 34, 36, 46, 48 und 52.

Das Vorladen des Zwischenkreises 4 aus dem Wechselstromnetz 2 erfolgt in gleicher Weise wie bei der Ausführungsform gemäß FIG 1, wobei allerdings der zusätzliche Schalter 52 geöffnet ist.

Für die Vorladung aus dem Gleichstromnetz 3 werden - im Unterschied zu FIG 1 - der Schalter 24 geöffnet und der Schalter 23 geschlossen. Außerdem wird der zusätzliche Schalter 52 geschlossen. Die übrigen Schalterstellung und Voraussetzungen entsprechen der Gleichstromvorladung bei der herkömmlichen Stromrichteranordnung 1 gemäß FIG 1.

In diesem Zustand sind die Vorladewiderstände 45 und 47 in Serie zwischen das Gleichstromnetz 3 und den Zwischenkreis 4 geschaltet, so dass die - dem Widerstandswert nach dem Vorladewiderstand 49 entsprechende - Serienschaltung der Vorladewiderstände 45 und 47 den Einschaltstrom begrenzt.

Sobald die Vorladung beendet ist, werden der Schalter 52 geöffnet und der Schalter 24 geschlossen, so dass die Serienschaltung der Vorladewiderstände 45 und 47 über den Schalter 24 und die Sekundärwicklung 22 niederohmig überbrückt ist.

Die Erfindung wird an dem anhand von FIG 2 dargestellten Ausführungsbeispiel besonders deutlich, ist gleichwohl auf dieses aber nicht beschränkt. Vielmehr können weitere Ausführungsformen der Erfindung aus der Beschreibung und den Ansprüchen abgeleitet werden.

## Patentansprüche

1. Mehrsystem-Stromrichteranordnung (1) zur wahlweisen Versorgung eines elektrischen Antriebsmotors (17,18) eines Schienenfahrzeugs aus einem Wechselstromnetz (2) oder einem Gleichstromnetz (3), mit einem Gleichspannungszwischenkreis (4), der einen netzseitigen Stromrichter (13,15) mit einem lastseitigen Stromrichter (14,16) verbindet, sowie mit einem Vorladeschaltkreis (53) zur Vorladung des Gleichspannungszwischenkreises (4), der mindestens einen Vorladewiderstand (45,47) umfasst, **dadurch gekennzeich**- **net,** dass der Vorladewiderstand (45,47) zur Vorladung des Gleichspannungszwischenkreises (4) mittels einer Schaltgruppe wahlweise mit dem Wechselstromnetz (2) oder mit dem Gleichstromnetz (3) koppelbar ist.

2. Mehrsystem-Stromrichteranordnung (1) nach Anspruch 1, wobei der Gleichspannungszwischenkreis (4) zwei Teil-Zwischenkreise (7,8) umfasst, die jeweils einen netzseitigen Stromrichter (13;15) mit jeweils einem lastseitigen Stromrichter (14;16) verbinden, und wobei der Vorladeschaltkreis (53) zwei Vorladewiderstände (45,47) umfasst, wobei zur Vorladung aus dem Wechselstromnetz (2) jeder der Teil-Zwischenkreise (7,8) mittels der Schaltgruppe über jeweils einen zugeordneten Vorladewiderstand (45;47) mit dem Wechselstromnetz (2) koppelbar ist, und wobei zur Vorladung aus dem Gleichstromnetz (3) die Teil-Zwischenkreise (7,8) mittels der Schaltgruppe über eine Reihenschaltung der Vorladewiderstände (45,47) mit dem Gleichstromnetz (3) koppelbar sind.
